(19) Europäisches Patentamt
European Patent Office
Office européen des brevets

(11) **EP 4 527 475 A1**

(12) **EUROPEAN PATENT APPLICATION**

(43) Date of publication:
**26.03.2025 Bulletin 2025/13**

(21) Application number: **23306571.3**

(22) Date of filing: **21.09.2023**

(51) International Patent Classification (IPC):
*A63F 13/50* (2014.01)   *G06F 13/10* (2006.01)
*G06F 3/01* (2006.01)   *H05B 47/105* (2020.01)

(52) Cooperative Patent Classification (CPC):
**H05B 47/105; A63F 13/213; A63F 13/25;
A63F 13/285; G06F 3/011; G06F 3/016;
H05B 47/165;** H05B 45/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Go Touch VR
59000 Lille (FR)**

(72) Inventors:
• **VEZZOLI, Eric
  59000 Lille (FR)**
• **MACLEOD, Kevin
  San Anselmo, 94960 (US)**

(74) Representative: **RVDB
  87, rue Nationale
  59000 Lille (FR)**

(54) **METHOD AND APPARATUS OF GENERATING LIGHTING EFFECT ACCORDING TO HAPTIC EFFECT**

(57)     There is provided methods and apparatus of generating (214) a lighting effect. To reach that aim, haptic data representative of haptic parameters of at least a haptic effect is received (201) and processed (202). Lighting data representative of input lighting parameters is received (211) and processed (212). At least a light-emitting device is controlled (214) according to at least a part of the haptic parameters and the input lighting parameters to generate the lighting effect.

**Fig. 2**

EP 4 527 475 A1

**Description**

FIELD

The present application generally relates to the field of lighting and, in particular, to the generating of lighting effect to be rendered by one or more light-emitting devices. The present application also relates to method and apparatus of controlling one or more light-emitting devices according to one or more haptic parameters representative of a haptic effect.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

To improve user experience when playing a media content such as a video content or a video game, it is known to control the lighting of one or more peripherals in the media content playback environment.

Controlling the lighting of such peripherals may for example increase the feeling of immersion while watching a movie or playing a video game. Such peripherals comprise smart LED light bulbs, RGB (Red, Green, Blue) components and accessories such as LED strips, keyboards, mice, mouse mats, speakers, screens, headsets or even the casing of the media player.

Lighting effects may be obtained by controlling the one or more light-emitting devices such as LED (Light-Emitting Diode) equipping the one or more peripherals.

However, there is still room for improvement to control the lighting of the media content playback environment, e.g., to improve the feeling of immersion.

SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of generating a lighting effect, the method comprising:

-    receiving haptic data representative of haptic parameters of at least a haptic effect;
-    receiving lighting data representative of input lighting parameters; and
-    controlling at least a light-emitting device according to at least a part of the haptic parameters and the input lighting parameters to generate the lighting effect.

In an exemplary embodiment, the method further comprises adjusting at least a part of the input lighting parameters according to the at least a part of the haptic parameters to obtain adjusted lighting parameters, the at least a light-emitting device being controlled according to the adjusted lighting parameters.

In an exemplary embodiment, the at least a light-emitting device is further controlled according to non-adjusted lighting parameters, the non-adjusted lighting parameters corresponding to the absolute complement of the at least a part of the lighting parameters in the input lighting parameters.

In a further exemplary embodiment, the lighting data corresponds to metadata received with video data representative of a video content.

In another exemplary embodiment, the lighting data corresponds to data representative of a lighting rendering mode selected in a plurality of lighting rendering modes.

In a further exemplary embodiment, the lighting data is obtained by real-time processing of video data representative of a video content.

In an additional exemplary embodiment, the input lighting parameters belong to a set of parameters comprising:

-    one or more parameters representative of brightness;
-    one or more parameters representative of color; and
-    one or more parameters representative of color temperature.

In another exemplary embodiment, the haptic parameters belong to a set of parameters comprising:

- one or more parameters representative of amplitude;
- one or more parameters representative of frequency;
- one or more parameters representative of a transient;
- one or more parameters representative of spatialization of said at least a haptic effect; and
- one or more parameters representative of a haptic animation starting at a starting location and ending at an ending location.

In an exemplary embodiment, brightness of the lighting effect is according to the one or more parameters representative of amplitude.

In another exemplary embodiment, a plurality of light-emitting devices being controlled to generate the lighting effect, each light-emitting device of the plurality being individually controlled according to the one or more parameters representative of spatialization.

In an additional exemplary embodiment, the at least a light-emitting device comprises at least a light source and at least a haptic actuator.

According to a second aspect of the present application, there is provided an apparatus of generating a lighting effect, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows a schematic representation of a communication network for communicating video and haptic data, in accordance with at least one exemplary embodiment;

**Figure 2** shows an example of a first scheme of generating lighting effect according to the haptic data of figure 1, in accordance with at least one exemplary embodiment;

**Figure 3** shows an example of a second scheme of generating lighting effect according to the haptic data of figure 1, in accordance with at least one exemplary embodiment;

**Figure 4** shows an example of a third scheme of generating lighting effect according to the haptic data of figure 1, in accordance with at least one exemplary embodiment;

**Figure 5** shows a schematic block diagram of step(s) of a method of generating a lighting effect according to the haptic data of figure 1, in accordance with at least one exemplary embodiment;

**Figure 6** illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of generating lighting effect(s) by controlling one or more light-emitting devices each comprising a set of one or more light sources, e.g., light-emitting diodes (LED). Each light-emitting device is controlled with parameters determined from one or more haptic parameters and from one or more input lighting parameters. The one or more haptic parameters belong to a set of haptic parameters representative of one or more haptic effects to be rendered by one or more haptic devices. The one or more input lighting parameters belong to a set of input lighting parameters obtained as metadata associated with video data representative of a video content (e.g., a movie or a video game) or determined by analyzing the video data.

The haptic effects described with the set of haptic parameters are for example associated with or related to the video content.

Haptic technology broadly refers to any technology recreating the sense of touch in a user interface by applying force, vibration, motion and other feelings such as temperature, to provide information to an end user, for example in addition to visual and audio information when rendering (multi)media contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device (also called haptic rendering device), a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), or PZT (Piezoelectric Actuators). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

A lighting effect corresponds to any generation of light through one or more light-emitting devices (lamp, light bulb, strip of LEDs or any peripheral or device incorporating one or more light sources, e.g., RGB light sources (for example arrangement of LEDs)). The lighting effect may correspond to a simple lighting effect (e.g., involving a single light-emitting device) or a more complex lighting effect involving a single or various light-emitting devices to render a light animation with time and/or spatial control of the light source(s) incorporated in the one or more light-emitting devices. Examples of complex lighting effect comprise a synchronized lighting effect, a coordinated lighting effect, an animated lighting effect, a propagating wave lighting effect, a breathing lighting effect, and a spectrum lighting effect.

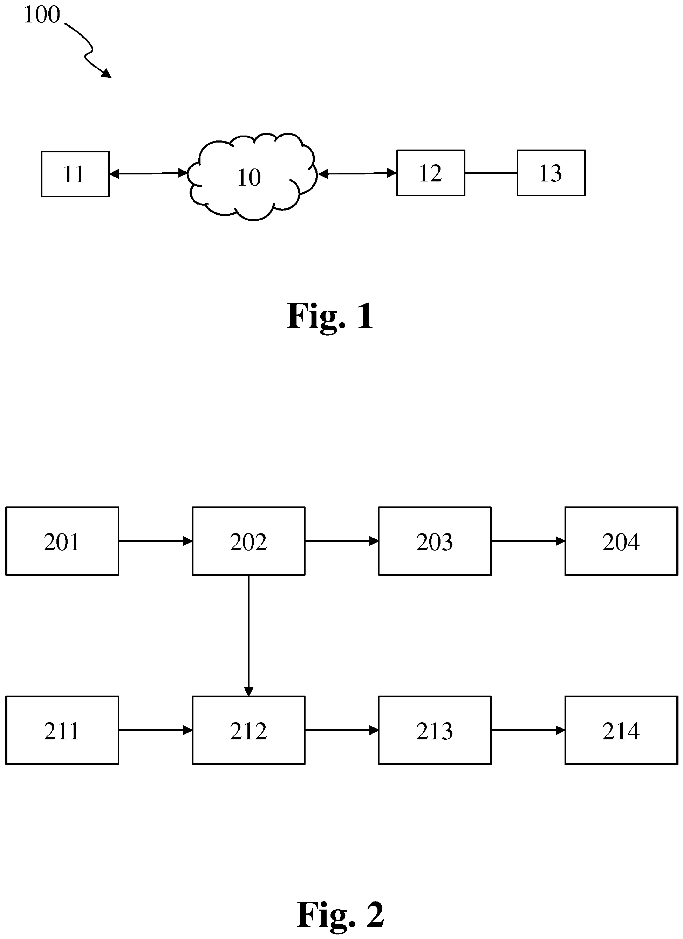

**Figure 1** illustrates a schematic representation of a system 100 for communicating and processing data representative of contents in accordance with at least one exemplary embodiment.

According to an embodiment, the system 100 may comprise various elements 11, 12, 13 each corresponding to a device, the devices 11, 12, 13 being interconnected through a network 10. The network 10 corresponds for example to a WAN (Wide Area Network), LAN (Local Area Network) or WLAN (Wireless Local Area Network) network or a combination of one or more of these networks. According to other examples, the network 10 corresponds to a broadcasting network, a cellular network, a satellite network, the internet network, or any combination thereof. The first device 11 may correspond to a server, a transmitter and/or an encoder and the second device 12 may correspond to a computing device, a rendering engine, a receiver and/or a decoder.

According to another embodiment, the network 10 may correspond to communication and/or data bus interconnecting the devices 11, 12, 13, some of the devices 11, 12, 13 being for example parts of a same device, e.g., devices 11 and 12. The first device 11 may correspond to a storage device, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 11 may correspond to an internal storage device (i.e., devices 11 and 12 being part of a same device), an attached storage device for example connected to the device 12 via a USB interface, and/or a network accessible storage device, as non-limiting examples.

The devices 11, 12, 13 illustrated on figure 1 may each correspond to a single element or device or to a plurality of elements or devices, may illustrate a set of one or more devices, each set of devices comprising similar devices, e.g., the first devices of the first set each correspond to a transmitter, to an encoder or to a storage device, according to the embodiment.

The network 10 enables the transmission of data representative of one or more contents belonging to a set of contents comprising:

- a video content, e.g., video data representative of a movie or a video game, i.e., data representative of images of a set of scenes, e.g., data representative of color values (e.g., RGB values) of pixels of the images;
- a haptic content, i.e., haptic data representative of one or more haptic effects to be rendered by one or more haptic device 13; the haptic data may be representative of haptic parameters representative of the haptic effects to be rendered, e.g., parameters representative of the amplitude and/or the frequency of the haptic effect, parameters representative of a transient, parameters representative of spatialization of the haptic effect, parameters representative of a haptic animation starting at a starting location and ending at an ending location, parameters representative of a type of haptic effect to be rendered, parameters representative of a target haptic device intended to render the haptic effect, and/or parameters representative of a rendering time and/or rendering duration of the haptic effect;
- a chroma content, e.g., lighting data representative of one or more lighting effects to be rendered by one or more light-emitting devices 13; the lighting data may be representative of input light parameters representative of the lighting effect to be rendered, e.g., parameters representative of brightness, parameters representative of color, parameters representative of color temperature, parameters representative of a time and/or duration, parameters representative of the targeted light-emitting device(s), and/or parameters representative of a lighting animation sequence.

Some or all of the received contents may be associated with or related to each other, for example the haptic data may be associated with the video content and the chroma content may be associated with the video content to render the haptic effect(s) and/or lighting effect(s) while playing the video content, the rendered haptic and/or lighting effects being related to the image contents played at the time of the rendering of the haptic effect(s) and/or lighting effect(s).

The contents that are transmitted from the first device(s) 11 to the second device(s) 12 may be of any form. For example, a content may be transmitted as an analog signal or as a digital signal representative of the data associated with the corresponding content(s).

Once received by the second device(s) 12, the signal may be converted from analog to digital or inversely to digital or analog, as it will be recognized by the skilled person in the art.

The second device(s) 12 is/are configured to process the received signal, notably for generating or determining data representative of one or more lighting effects according to the received contents, e.g., according to the chroma content and the haptic content.

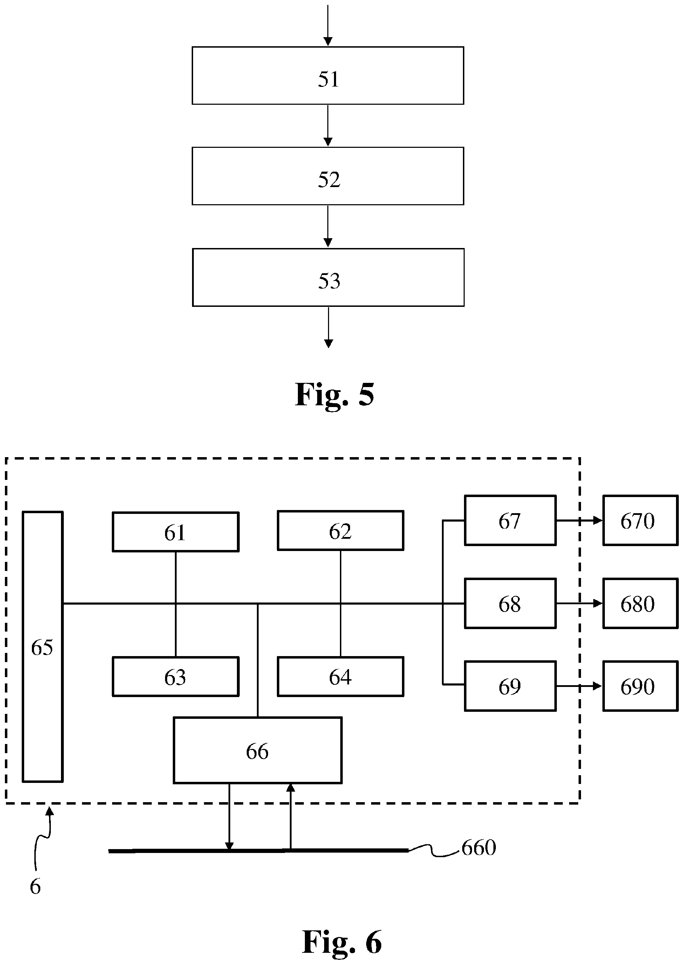

Exemplary embodiments of the first and/or second devices 11, 12 are described hereinafter with regard to figure 6.

The second device(s) 12 is(are) communicatively coupled to a set of third devices 13 comprising one or more light-emitting devices and one or more haptic devices. According to a specific and non-limiting example, a third device 13 corresponds to a device configured to render light and haptic effects. **Figures 2-5** illustrate schematic representations of generation schemes of lighting effect(s) in accordance with exemplary embodiments.

The blocks of figures 2 to 5 represent indifferently operations/steps of a process/method and processing units implementing such operations/steps of the process/method. The processing units may be implemented as a single element or as separate elements as a combination of hardware and software as known to those skilled in the art.

Like reference numerals used for blocks of figures 2 to 5 refer to same operations/steps and to similar processing units implemented such operations/steps. For sake of brevity, duplicate description of such blocks may be omitted.

**Figure 2** shows a first scheme of generating lighting effect(s) from haptic data and lighting data in accordance with exemplary embodiments.

At block 201, haptic data representative of haptic effects to be rendered is received, for example by the device 12 from the device 11.

The haptic data is for example signaled and/or encoded into a container under the form of encoded data, the container corresponding for example to a file, a bitstream, data packets, data frame(s).

The haptic data may for example be temporarily stored in a volatile memory, e.g., cache memory.

For each haptic effect, the haptic data may comprise data representative of haptic parameters usable for the rendering of the haptic effect.

The haptic parameters may comprise one or more of the following parameters:

- parameters representative of the type of the haptic (and/or sensorial) effect (e.g., vibrotactile effects, force effects, stiffness effects, texture effects, temperature effects, wind effects, pain effects, olfactive effects, light-based effects, etc.); and/or
- parameters representative of the amplitude, phase and/or frequency of signal(s) representing the haptic effect; and/or
- parameters representative of a transient, e.g., a parameter representative of an amplitude and a parameter representative of a duration of the transient or a parameter representative of the difference between 2 amplitude spectral densities; and/or

- parameters representative of the starting time of the haptic effect; and/or
- parameters representative of the duration of the haptic effect; and/or
- parameters representative of one or more body parts of a body model that is/are targeted by the haptic effect; and/or
- parameters or information representative of the haptic device or type of haptic device that is foreseen to render the haptic effect on the user body; and/or
- parameters representative of a haptic animation starting at a starting location and ending at an ending location: a haptic animation may correspond to a haptic effect, or a sequence of haptic effects, rendered via a plurality of haptic actuators according to a path, the path being for example defined with a starting or initial point and with an ending or final point, or a haptic animation may correspond to a haptic effect or to a sequence of haptic effects spreading across one or more parts of the body of the user receiving this (these) haptic effect(s) and rendered through a sequence of haptic actuators arranged onto the one or more part of the user's body.

According to a variant, an identifier is received in the haptic data, the identifier being configured to identify the haptic effect to retrieve, for example from a memory of the system 100, the parameters representative of the haptic effect.

At block 202, a haptic engine (also called haptic rendering engine) receives the haptic data and processes the haptic data to obtain the haptic parameters of each haptic effect to be rendered. Processing of the haptic data may comprise parsing and/or decoding the haptic data to obtain the haptic parameters.

The haptic engine is coupled in communication with a haptic device illustrated with block 204 comprising one or more haptic actuators to render the haptic effect. The haptic engine is for example connected with the haptic device via a wired or wireless connection.

The haptic device is for example connected to the haptic engine through USB input terminal, a phone connector (also known as phone jack, audio jack, headphone jack or jack plug) input terminal or an HDMI input terminal.

According to another example, the haptic device is connected to the haptic engine using Wifi® or Bluetooth® communication interfaces.

At block 203, the haptic engine transmits to the one or more haptic devices the haptic parameter via dedicated interface(s).

Data exchange between the haptic device and the haptic engine may be performed in the framework of a communication protocol, data being exchanged by way of APIs (Application Program Interface) that may be implemented both in the haptic engine 202 and in the haptic device 204.

According to a variant, the haptic engine 202 may process the haptic parameters to adapt or adjust the received haptic parameters to haptic capabilities of the haptic device 204.

According to this variant, the haptic engine 202 may obtain haptic device data representative of the haptic rendering capabilities of the haptic device(s) coupled to the haptic engine 202.

The haptic device data may be received automatically from each haptic device 204 when connecting the haptic device 204 to the haptic engine 202 via the communication interfaces 203. For example, when connecting a haptic device to the haptic engine, the haptic device may automatically initiate a process for transmitting the haptic device data through dedicated API(s). This process corresponds for example to a so-called "plug and play" (PnP) process, the haptic device and the haptic engine corresponding to PnP devices.

According to another example, the haptic device data is obtained or retrieved from a memory of the haptic engine or from a remote system, for example upon reception of an identifier identifying the haptic device, said identifier being for example automatically transmitted by the haptic device to the haptic engine or transmitted by the haptic device after transmission of a request by the haptic engine.

The haptic device data comprise for example one or more of the following information: the type of the haptic device, technical characteristics of the haptic device, the number and/or type of the haptic actuator(s) comprised in the haptic device, the spatial distribution of the haptic actuator(s) in the haptic device, the body part(s) associated with the haptic device, etc.

At block 204, the haptic effect(s) described with the haptic parameters received from the haptic engine 202 is(are) rendered by the one or more haptic actuators comprised in the one or more haptic devices coupled to the haptic engine.

At block 211, lighting data representative of lighting effect(s) to be rendered is received, for example by the device 12 from the device 11, which may be the same as or separate to the devices 11, 12 used for exchanging the haptic data.

The lighting data is for example signaled and/or encoded into a container under the form of encoded data, the container corresponding for example to a file, a bitstream, data packets, data frame(s).

The lighting data may for example be temporarily stored in a volatile memory, e.g., cache memory.

Haptic data and lighting data may be transmitted via a same channel or via separate channels.

Haptic data and lighting data may be associated with a video content, e.g., a movie, a video clip or a video game. Haptic data and lighting data may correspond to metadata of the video data representative of the video content.

For each lighting effect, the lighting data may comprise data representative of input lighting parameters usable for the rendering of the lighting effect.

The input lighting parameters may comprise one or more of the following parameters:

- parameters representative of brightness or luminous intensity, for example defined in candela (cd); and/or
- parameters representative of color, for example specified in a determined color space like RGB (Red, Green, Blue) color model or CMYK (Cyan Magenta Yellow, Black) color model, a color value being for example coded in 8 or 10 bits for each color of the color model; and/or
- parameters representative of color temperature, defined in Kelvin (K).

In an embodiment, the lighting data may comprise additional information or parameters, for example:

- information or parameters representative of the type of the light-emitting device intended to render at least part of the lighting effect; and/or
- information or parameters identifying each light-emitting device intended to render at least part of the lighting effect; and/or
- information or parameters representative of the timing of the lighting effect (when the lighting effect is to be rendered or timing information for each light-emitting device for switching on or off the light-emitting device); and/or
- information or parameters representative of the frequency of the lighting effect (e.g., for flickering lighting effect).

At block 212, a chroma engine receives the lighting data and processes the lighting data to obtain the input lighting parameters of each lighting effect to be rendered. Processing of the lighting data may comprise parsing and/or decoding the lighting data to obtain the input lighting parameters.

The chroma engine is coupled in communication with one or more light-emitting devices illustrated with block 204 each comprising one or more light sources such as LEDs for example. The chroma engine is for example connected with the light-emitting device via a wired or wireless connection.

The chroma engine further receives the haptic parameters, or part of the haptic parameters, obtained by the haptic engine from the haptic data.

The chroma engine and the haptic engine may be parts of a same device 11 or of separate devices coupled in communication to each other.

The chroma engine processes one or more of input lighting parameters and one or more of the haptic parameters to adjust the one or more input lighting parameters according the one or more haptic parameters.

Such processing enables to obtain adjusted lighting parameters corresponding to input lighting parameters modified according to the one or more haptic parameters.

The adjusting may be performed a set of determined rules or functions, a specific rule or function being for example selected according to the type of the input lighting parameter that is adjusted.

According to a first example, the input lighting parameter to be adjusted corresponds to the brightness or luminous intensity, noted 'I'. The haptic parameter used to adjust the input lighting parameter 'I' corresponds to the amplitude of the haptic effect.

The input lighting parameter 'I' may for example be adjusted with a weighting factor, noted "k", that is dependent on the amplitude of the haptic effect, the weighting factor being for example determined as a function of the amplitude or from a LUT (Look-Up Table) mapping values of amplitude with values of weighting factors.

The adjusted input lighting parameter, noted '$I_{adjust}$' is determined by:

$$I_{adjust} = k^*I \hspace{4cm} \text{Equation 1}$$

According to a variant, the adjusted input lighting parameter is determined by:

$$I_{adjust} = k_1^*I + k_2^*I' \hspace{4cm} \text{Equation 2}$$

with $k_1$ and $k_2$ each comprised between 0 and 1 and $k_1+k_2 = 1$ (e.g., $k_1$=0.7 and $k_2$=0.3) and I' corresponding to I modulated by the amplitude of the haptic effect.

The value of I' may for example be obtained with the equation 1.

According to a second example, the input lighting parameter to be adjusted corresponds to the frequency, noted 'F'. The haptic parameter used to adjust the input lighting parameter 'F' corresponds to the frequency of the haptic effect.

The input lighting parameter 'F' may for example be adjusted with a weighting factor, noted "k", that is dependent on the frequency of the haptic effect, the weighting factor being for example determined as a function of the frequency or from a LUT (Look-Up Table) mapping values of amplitude with values of weighting factors.

For example, when the frequency of the haptic effect corresponds to a "high" frequency (e.g., a frequency greater than a first determined threshold), the frequency F is increased and when the frequency of the haptic effect corresponds to a "low" frequency (e.g., a frequency less than a second determined threshold), the frequency F is decreased, the frequency F remaining unchanged when the frequency of the haptic effect is comprised between the second determined threshold and the first determined threshold.

The frequency F may be a parameter of a lighting effect corresponding to a lighting animation, for example the switching on and off at a determined frequency F of the keys of a backlit keyboard according to a determined sequence, or of a lighting effect corresponding to a flickering effect.

According to a third example, the input lighting parameter to be adjusted corresponds to the duration of the lighting effect, e.g., when the lighting effect has a limited duration. According to this third example, the duration of the lighting effect may be adjusted or modulated according to the duration of a haptic effect that is to be rendered at a time corresponding to the rendering time of the lighting effect. For example, the duration of the lighting effect is adjusted to correspond to the duration of the haptic effect.

According to a fourth example, when the haptic parameters comprise one or more parameters representative of spatialization of the haptic effect, such spatialization information is used to adjust one or more of the input lighting parameters.

For example, the spatialization information of the haptic effect may be used to modulate the lighting parameters of some of the light-emitting devices coupled to the chroma engine. For example, when the spatialization information of the haptic effect indicates which haptic devices shall render the haptic effect (e.g., the haptic devices located on the right-hand side of the user), then the lighting parameters of only the light-emitting devices located in a same area as the haptic devices (e.g., the light-emitting devices located on the right-hand side of the user) are adjusted to render an adjusted lighting effect. Brightness and/or frequency may for example be increased for the lighting effect rendered by these light-emitting devices.

A location map and associated spatial information about the arrangement of the light-emitting devices in the environment of the user may be obtained in a previous operation. Such a location map may be obtained with a two-dimensional or three-dimensional scan of the environment of the user, for example with a camera.

According to a variant, the location map and associated spatial information about the arrangement of the light-emitting devices in the environment of the user may be obtained from the user inputting such information via a user interface, e.g., a GUI.

Spatial information may comprise the relative position of the light-emitting devices with respect to each other or with respect to the chair of the user or with respect to a screen used to display the video content associated with the lighting and haptic data.

According to a fifth example, a plurality of input lighting parameters may be adjusted, for example brightness 'I' and frequency 'F' or brightness 'I' and duration 'D' according to several haptic parameters, for example the amplitude and the frequency of the haptic effect or the amplitude and the duration of the haptic effect, respectively.

The one or more input lighting parameters that are not adjusted according to haptic parameters are called non-adjusted lighting parameters and form the absolute complement of the input the lighting parameters having been adjusted (called adjusted lighting parameters) in the received set of input lighting parameters.

According to a variant, the chroma engine 202 may further process the input lighting parameters to further adapt or adjust one or more of the input lighting parameters according to user parameters representative of user preferences. Such user parameters may be received from a user interface, e.g., a GUI (Graphical User Interface). Like the haptic parameters, the user parameters may be used by the chroma engine to adjust or modulate one or more of the input lighting parameters, for example in addition to the adjustment made according to the one or more haptic parameters.

At block 213, the chroma engine transmits to the one or more light-emitting devices the adjusted lighting parameters, and the non-adjusted lighting parameters when the case may be, via dedicated interface(s).

Data exchange between the chroma engine and the light-emitting device(s) may be performed in the framework of a communication protocol, data being exchanged by way of APIs (Application Program Interface) that may be implemented both in the chroma engine 212 and in the one or more light-emitting devices 214.

At block 214, the lighting effect(s) described with the adjusted lighting parameters, and the non-adjusted lighting parameters when appropriate, received from the chroma engine 212 is(are) rendered by the one or more light sources comprised in the light-emitting devices communicatively coupled to the chroma engine. The light sources and associated light-emitting devices are controlled with the adjusted lighting parameters, and the non-adjusted lighting parameters when appropriate, to render the lighting effects.

The lighting effects rendered according to the adjusted lighting parameters are advantageously rendered in a synchronized manner with the rendering of the haptic effects, the haptic parameters of which having been used to obtain the adjusted lighting parameters.

When the lighting effect that is rendered by the light-emitting device(s) corresponds to a lighting animation that is repeatedly rendered (for example during the playback of a video as long as the video is played), then the adjusted lighting effect resulting from the control of the lighting effect with the adjusted lighting parameters is rendered for a duration that is equal to the duration of the haptic effect, the haptic parameters of which having been used to adjust the input lighting parameters.

Such a process enables to combine lighting effect(s) and haptic effect(s) and to increase the feeling of immersion of a user playing a video game or watching a video content by relating the lighting effects to the haptic effects.

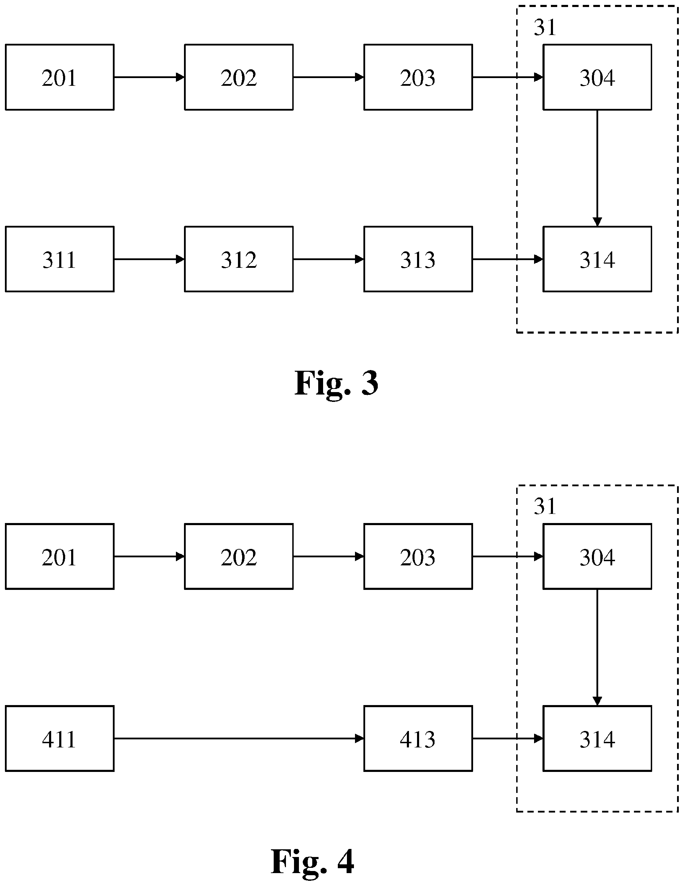

**Figure 3** shows a second scheme of generating lighting effect(s) from haptic data and lighting data or video data in accordance with exemplary embodiments.

Operations performed at blocks 201 to 203 have been described with regard to figure 2 and description of blocks 201 to 203 is not repeated hereinafter.

According to this exemplary second scheme, the haptic parameters obtained by the haptic engine 202 are transmitted to one or more devices 31 each having one or more haptic rendering capabilities 304 and one or more lighting rendering capabilities 314 sharing a same controller.

The device 31 may comprise one or more haptic actuators and one or more light sources, e.g., LEDs. The device 31 may correspond to a mouse, a keyboard, a palm rest, a mouse mat, a headset, etc.

Operations performed at blocks 311, 312, 313 may be similar to the operations 211, 212, 213, respectively, except that the haptic parameters obtained at block 202 by the haptic engine are not transmitted to block 312, in contrast to the embodiments described with regard to figure 2.

At block 311, lighting data is received, then processed by a chroma engine at block 312 to extract or obtain the input lighting parameters that are transmitted to the device 31. In contrast to block 211, the input lighting parameters are not adjusted by the chroma engine.

At block 31, one or more input lighting parameters received from the chroma engine are adjusted according to one or more haptic parameters, i.e., by the controller comprised in the device 31 comprising the haptic actuator(s) 304 and the light source(s) 314, similarly to the description of block 212 of figure 2.

According to other embodiments, video data representative of a video content is received at block 311.

The video data may for example be temporarily stored in a volatile memory, e.g., cache memory, for example to enable a processing of the video data image by image in following operations.

At block 312, the video data received at block 311 is processed, for example at real-time, for analyzing the content of the images of the video content and extracting, for each image or each group of images (for example for each group of 2, 5 or 10 consecutive images), lighting data representative of input lighting parameters, according to any method known to those skilled in the art, for example as described in the article "Extraction of color information and visualization of color differences between digital images through pixel-by-pixel color-difference mapping", by Woo Sik Yoo et al., published on 4 December 2022, or in the article "Contrast compensation by fuzzy classification and image illumination analysis for back-lit and front-lit color face images", by Chun-Ming Tsai et al., published on September 2010.

At block 313, the obtained input lighting parameters are transmitted to the device 31. The one or more input lighting parameters obtained at block 312 are adjusted at block 31, similarly to the adjusting described in the description of block 212 of figure 2.

**Figure 4** shows a third scheme of generating lighting effect(s) from haptic data and lighting data in accordance with exemplary embodiments.

Operations performed at blocks 201 to 203 and 31 have been described with regard to figure 2 and/or figure 3 and description of blocks 201 to 203 and 31 is not repeated hereinafter.

At block 411, lighting data representative of lighting modes received, for example by the device 12 from the device 11, which may be the same as or separate to the devices 11, 12 used for exchanging the haptic data.

The lighting data representative of a lighting mode comprise input lighting parameters representative of the lighting effect specific to this lighting mode.

A lighting mode may correspond to a specific lighting effect, which is not directly related to the video content that is currently played back.

A lighting mode may for example be representative of an atmosphere (e.g., warm atmosphere, quiet atmosphere, exciting atmosphere, etc.), of a type or genre of video game (e.g., action video game, shooter video game, strategy video game, fantasy video game, sport video game, etc.), of a type of video content (e.g., action, thriller, comedy, fantasy, etc.).

The lighting mode may for example be selected by a user via a GUI among a plurality of lighting modes. When a lighting mode is selected, only the lighting data representative of the selected lighting mode may be selected.

The input lighting parameters representative of a lighting mode may be identical to the input lighting parameters described previously, i.e., the input lighting parameters may comprise:

- parameters representative of brightness or luminous intensity; and/or
- parameters representative of color; and/or
- parameters representative of color temperature; and/or
- parameters representative of the type of the light-emitting device intended to render the lighting effect; and/or
- parameters identifying each light-emitting device intended to render the lighting effect; and/or

- parameters representative of the timing of the lighting effect (when the lighting effect is to be rendered or timing information for each light-emitting device for switching on or off the light-emitting device); and/or
- parameters representative of the frequency of the lighting effect.

At block 412, the input lighting parameters are transmitted directly to the controller of the device 31, i.e., without processing by a chroma engine.

At block 31, at least one of the input lighting parameters is processed, i.e., adjusted according to one or more haptic parameters received by the controller of the device 31. The lighting effect associated with the lighting mode described by the input lighting parameters is then rendered by the light sources of the device according to adjusted, and potentially non-adjusted, lighting parameters, in a synchronized manner with the rendering of the haptic effect described with the haptic parameters.

The one or more input lighting parameters obtained at block 411 are adjusted at block 31, similarly to the adjusting described in the description of block 212 of figure 2.

**Figure 5** shows a schematic block diagram of steps of a method of generating one or more lighting effects, in accordance with at least one exemplary embodiment.

In a first step 51, haptic data representative of haptic parameters of at least a haptic effect is received, for example from a memory or a remote device.

In a second step 52, lighting data representative of input lighting parameters is received, for example from a memory or a remote device.

In a third step 53, at least a light-emitting device is controlled according to at least a part of the haptic parameters received at step 51 and the input lighting parameters received at step 52 to generate the lighting effect.

**Figure 6** shows a schematic block diagram illustrating an example of a system 6 in which various aspects and exemplary embodiments are implemented.

System 6 may be embedded as one or more devices including the various components described below. In various embodiments, the system 6 may be configured to implement one or more of the aspects described in the present application.

Examples of equipment that may form all or part of the system 6 include personal computers, laptops, smartphones, tablet computers, digital multimedia set top boxes and their associated processing systems, head mounted display devices (HMD, see-through glasses), light-emitting devices, haptic sensors or actuators, "caves" (system including multiple displays), servers, haptic encoders, haptic decoders, chroma encoders, chroma decoders, video encoders, video decoders, post-processors processing output from a haptic and/or chroma and/or video decoder, pre-processors providing input to a haptic and/or chroma and/or video encoder, web servers, set-top boxes, wireless (e.g., Bluetooth®) connected wearable haptic devices, game controller, mouse, mousepad, keyboard, palm rest, chairs, desk, XR headset, headphones, bracelet, head and/or lumbar support device or chair, any other device for processing haptic data or signals, and/or chroma (lighting) data or signals, and/or video data or signals, or other communication devices. Elements of system 6, singly or in combination, may be embodied in a single integrated circuit (IC), multiple ICs, and/or discrete components. For example, in at least one embodiment, the processing and encoder/decoder elements of system 6 may be distributed across multiple ICs and/or discrete components. In various embodiments, the system 6 may be communicatively coupled to other similar systems, or to other electronic devices, via, for example, a communications bus or through dedicated input and/or output ports.

The system 6 may include at least one processor 61 configured to execute instructions loaded therein for implementing, for example, the various aspects described in the present application. Processor 61 may include embedded memory, input output interface, and various other circuitries as known in the art. The system 6 may include at least one memory 62 (for example a volatile memory device and/or a non-volatile memory device). System 6 may include a storage device 64, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 64 may include an internal storage device, an attached storage device, and/or a network accessible storage device, as non-limiting examples.

The system 6 may include an encoder/decoder module 63 configured, for example, to process data to provide encoded/decoded chroma (lighting) signal data and/or encoded/decoded haptic signal or data and/or encoded/decoded video signal or data, and the encoder/decoder module 63 may include its own processor and memory. The encoder/decoder module 63 may represent module(s) that may be included in a device to perform the encoding and/or decoding functions. As is known, a device may include one or both of the encoding and decoding modules. Additionally, encoder/decoder module 63 may be implemented as a separate element of system 63 or may be incorporated within processor 61 as a combination of hardware and software as known to those skilled in the art.

Program code to be loaded onto processor 61 or encoder/decoder 63 to perform the various aspects described in the present application may be stored in storage device 64 and subsequently loaded onto memory 62 for execution by processor 61. In accordance with various embodiments, one or more of processor 61, memory 62, storage device 64, and encoder/decoder module 63 may store one or more of various items during the performance of the processes described in the present application. Such stored items may include, but are not limited to, data representative of chroma/lighting content, data representative of video content, haptic-related data, a bitstream, matrices, variables, and intermediate or final results from the processing of equations, formulas, operations, and operational logic.

In several embodiments, memory inside of the processor 61 and/or the encoder/decoder module 63 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 62 and/or the storage device 64, for example, a dynamic volatile memory and/or a non-volatile flash memory. In at least one embodiment, a fast external dynamic volatile memory such as a RAM may be used as working memory for data processing.

The input to the elements of system 6 may be provided through various input devices as indicated in block 65. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 65 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 6 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 61 as necessary. Similarly, aspects of USB or HDMI interface processing may be implemented within separate interface ICs or within processor 61 as necessary. The processed stream may be provided to various processing elements, including, for example, processor 61, and encoder/decoder 63 operating in combination with the memory and storage elements to process the data stream as necessary for presentation on an output device.

Various elements of system 6 may be provided within an integrated housing. Within the integrated housing, the various elements may be interconnected and transmit data therebetween using suitable connection arrangement 65, for example, an internal bus as known in the art, including the I2C bus, wiring, and printed circuit boards.

The system 6 may include communication interface 66 that enables communication with other devices via communication channel 660. The communication interface 66 may include, but is not limited to, a transceiver configured to transmit and to receive data over communication channel 660. The communication interface 66 may include, but is not limited to, a modem or network card and the communication channel 660 may be implemented, for example, within a wired and/or a wireless medium.

Data may be streamed to the system 6, in various embodiments, using a Wi-Fi network such as IEEE 802.11. The Wi-Fi signal of these embodiments may be received over the communications channel 660 and the communications interface 66 which are adapted for Wi-Fi communications. The communications channel 660 of these embodiments may be typically connected to an access point or router that provides access to outside networks including the Internet for allowing streaming applications and other over-the-top communications.

Other embodiments may provide streamed data to the system 6 using a set-top box or a computer that delivers the data over the HDMI connection of the input block 65.

Still other embodiments may provide streamed data to the system 6 using the RF connection of the input block 65.

The streamed data may be used as a way for signaling information used by the system 6. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding data processing device in various embodiments.

The system 6 may provide an output signal to various output devices, including a display 670, light-emitting devices or light sources 680, and other peripheral devices 590 like haptic devices/actuators.

In various embodiments, control signals may be communicated between the system 6 and the display 670, light-emitting devices or light sources 680, or other peripheral devices 690 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 6 via dedicated connections through respective interfaces 67, 68, and 69.

Alternatively, the output devices may be connected to system 6 using the communications channel 660 via the communications interface 66. The display 670, light-emitting devices or light sources 680 and/or haptic device(s) (actuators) 690 may be integrated in a single unit with the other components of system 6 in an electronic device such as, for example, a television.

In various embodiments, the display interface 67 may include a display driver, such as, for example, a timing controller (T Con) chip.

The display 670, light-emitting devices or light sources 680 and/or haptic device(s) (actuators) 690 may alternatively be separate from one or more of the other components. In various embodiments in which the display 670, light-emitting devices or light sources 680 and/or haptic device(s) (actuators) 690 may be external components, the output signal may be provided via dedicated output connections, including, for example, HDMI ports, USB ports, or COMP outputs.

In **Figures 1 to 6,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic and/or chroma encoders, video and/or haptic and/or chroma decoders, haptic engine, chroma engine, post-processors processing output from a video decoder, pre-processors providing input to a video encoder, web servers, set-top boxes, wireless connected wearable haptic devices, e.g., Bluetooth® connected wearable haptic devices, game controller, mouse, mousepad, keyboard, palm rest, chairs, desk, XR headset, headphones, bracelet, head and/or lumbar support device or chair, any light source, and any other device for processing haptic data or signals representative of one or more haptic feedback or effect and/or for processing lighting/chroma data or signals representative of one or more lighting mode or effect, or other communication devices. As should be clear, the equipment may be mobile.

Computer software may be implemented by the processor 61 or by hardware, or by a combination of hardware and software. As a non-limiting example, the embodiments may be also implemented by one or more integrated circuits. The memory 62 may be of any type appropriate to the technical environment and may be implemented using any appropriate data storage technology, such as optical memory devices, magnetic memory devices, semiconductor-based memory devices, fixed memory, and removable memory, as non-limiting examples. The processor 61 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of generating a lighting effect, the method comprising:

   - receiving haptic data representative of haptic parameters of at least a haptic effect;
   - receiving lighting data representative of input lighting parameters; and
   - controlling at least a light-emitting device according to at least a part of said haptic parameters and said input lighting parameters to generate said lighting effect.

2. The method according to claim 1, further comprising adjusting at least a part of said input lighting parameters according to said at least a part of said haptic parameters to obtain adjusted lighting parameters, said at least a light-emitting device being controlled according to said adjusted lighting parameters.

3. The method according to claim 2, wherein said at least a light-emitting device is further controlled according to non-adjusted lighting parameters, said non-adjusted lighting parameters corresponding to the absolute complement of said at least a part of said lighting parameters in said input lighting parameters.

4. The method according to any one of claims 1 to 3, wherein said lighting data corresponds to metadata received with video data representative of a video content.

5. The method according to any one of claims 1 to 3, wherein said lighting data corresponds to data representative of a lighting rendering mode selected in a plurality of lighting rendering modes.

6. The method according to any one of claims 1 to 3, wherein said lighting data is obtained by real-time processing of video data representative of a video content.

7. The method according to any one of claims 1 to 6, wherein said input lighting parameters belong to a set of parameters comprising:

   - one or more parameters representative of brightness;
   - one or more parameters representative of color; and
   - one or more parameters representative of color temperature.

8. The method according to any one of claims 1 to 7, wherein said haptic parameters belong to a set of parameters comprising:

   - one or more parameters representative of amplitude;
   - one or more parameters representative of frequency;
   - one or more parameters representative of a transient;
   - one or more parameters representative of spatialization of said at least a haptic effect; and
   - one or more parameters representative of a haptic animation starting at a starting location and ending at an ending location.

9. The method according to claim 8, wherein brightness of said lighting effect is according to said one or more parameters representative of amplitude.

10. The method according to claim 8 or 9, wherein a plurality of light-emitting devices being controlled to generate said lighting effect, each light-emitting device of said plurality being individually controlled according to said one or more parameters representative of spatialization.

11. The method according to any one of claims 1 to 10, wherein said at least a light-emitting device comprises at least a light source and at least a haptic actuator.

12. An apparatus (5) of generating a lighting effect, wherein said apparatus comprising a memory (52) associated with at least a processor (51) configured to implement the method according to any one of claims 1 to 11.

13. A non-transitory processor readable medium having stored therein instructions for causing a processor to perform at least the steps of the method according to one of claims 1 to 11.

14. A computer program product comprising instructions of program code for executing the method according to any one of claims 1 to 11, when said program is executed on a computer.

100

**Fig. 1**

**Fig. 2**

```
┌──────┐      ┌──────┐      ┌──────┐      ┌─ ─ ─ ─ ─ ─ ─ ─ ─┐
│      │      │      │      │      │        31               
│ 201  │ ───▶ │ 202  │ ───▶ │ 203  │ ───▶ │ ┌──────┐        │
│      │      │      │      │      │      │ │ 304  │        │
└──────┘      └──────┘      └──────┘        └──┬───┘        │
                                            │   │            │
                                                ▼            │
┌──────┐      ┌──────┐      ┌──────┐        │ ┌──────┐      │
│      │      │      │      │      │          │ 314  │      │
│ 311  │ ───▶ │ 312  │ ───▶ │ 313  │ ─────▶ │ │      │      │
│      │      │      │      │      │          └──────┘      │
└──────┘      └──────┘      └──────┘        └─ ─ ─ ─ ─ ─ ─ ─┘
```

# Fig. 3

```
┌──────┐      ┌──────┐      ┌──────┐      ┌─ ─ ─ ─ ─ ─ ─ ─ ─┐
│      │      │      │      │      │        31               
│ 201  │ ───▶ │ 202  │ ───▶ │ 203  │ ───▶ │ ┌──────┐        │
│      │      │      │      │      │      │ │ 304  │        │
└──────┘      └──────┘      └──────┘        └──┬───┘        │
                                            │   │            │
                                                ▼            │
┌──────┐                    ┌──────┐        │ ┌──────┐      │
│      │                    │      │          │ 314  │      │
│ 411  │ ─────────────────▶ │ 413  │ ─────▶ │ │      │      │
│      │                    │      │          └──────┘      │
└──────┘                    └──────┘        └─ ─ ─ ─ ─ ─ ─ ─┘
```

# Fig. 4

**Fig. 5**

**Fig. 6**

Europäisches
Patentamt

European
Patent Office

Office européen
des brevets

# EUROPEAN SEARCH REPORT

Application Number

EP 23 30 6571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/096656 A1 (GILG MATTHEW RYAN [US] ET AL) 1 April 2021 (2021-04-01) * paragraph [0022] – paragraph [0231]; figures 4–24 * | 1–14 | INV. A63F13/50 G06F13/10 G06F3/01 H05B47/105 |
| X | US 2023/044961 A1 (RESNICK DAVID S [US] ET AL) 9 February 2023 (2023-02-09) * paragraph [0030] – paragraph [0091]; figures 1–7 * | 1–4,6–14 | |
| X | KR 2020 0035384 A (CK MAT LAB CO LTD [KR]) 3 April 2020 (2020-04-03) * paragraph [0024] – paragraph [0082]; figures 1–2 * | 1,2,5–8, 11–14 | |

TECHNICAL FIELDS
SEARCHED      (IPC)

H05B
A63F
G06F

The present search report has been drawn up for all claims

| Place of search | Date of completion of the search | Examiner |
|---|---|---|
| Munich | 4 March 2024 | Beaugrand, Francois |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 6571

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | Publication date | Patent family member(s) | Publication date |
|---|---|---|---|
| US 2021096656 A1 | 01-04-2021 | NONE | |
| US 2023044961 A1 | 09-02-2023 | US 2023039530 A1 | 09-02-2023 |
| | | US 2023044961 A1 | 09-02-2023 |
| KR 20200035384 A | 03-04-2020 | NONE | |

EPO FORM P0459

For more details about this annex : see Official Journal of the European Patent Office, No. 12/82

# EP 4 527 475 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WOO SIK YOO et al.** *Extraction of color information and visualization of color differences between digital images through pixel-by-pixel color-difference mapping*, 04 December 2022

- **CHUN-MING TSAI et al.** *Contrast compensation by fuzzy classification and image illumination analysis for back-lit and front-lit color face images*, September 2010